# EUROPÄISCHE PATENTSCHRIFT

(11) **EP 2 438 665 B1**
(45) Veröffentlichungstag und Bekanntmachung des Hinweises auf die Patenterteilung: **13.02.2013**
(21) Anmeldenummer: 10720634.4
(22) Anmeldetag: 02.06.2010
(51) Int. Cl.: H02G 13/00, B65D 45/02

(54) **ANORDNUNG ZUM BLITZSCHUTZ EINER ELEKTRONISCHEN EINHEIT**
ARRANGEMENT FOR LIGHTNING PROTECTION OF AN ELECTRONIC UNIT
AGENCEMENT POUR LA PROTECTION D'UNE UNITÉ ÉLECTRONIQUE CONTRE LA FOUDRE

(30) Priorität: 03.06.2009 DE 102009026686; 03.06.2009 US 183732 P
(43) Veröffentlichungstag der Anmeldung: 11.04.2012
(73) Patentinhaber: Airbus Operations GmbH, 21129 Hamburg (DE); Airbus Opérations SAS, 31060 Toulouse (FR)
(72) Erfinder: FRONTZEK, Thomas, 28199 Bremen (DE); THEROND, Frederic, F-31830 Plaisance du touch (FR)
(74) Vertreter: Isarpatent
(86) Internationale Anmeldenummer: PCT/EP2010/057677
(87) Internationale Veröffentlichungsnummer: WO 2010/139709

(56) Entgegenhaltungen:
- WO-A2-02/36426

## Beschreibung

Die Erfindung betrifft eine Blitzschutz-Anordnung eines Flugzeuges zum Ableiten eines Blitzstromes aufgrund eines Blitzeinschlages von einer elektronischen Einheit, die an einer aerodynamischen Verkleidung des Flugzeuges angebracht ist.

Im Flugzeugbau werden zur Gewichtseinsparung Verbundwerkstoffe, insbesondere Schichtverbundwerkstoffe eingesetzt. Ein weit verbreitetes Bauelement sind dabei sogenannte CFK-Sandwich-Panels, die eine wabenförmig strukturierte Mittelschicht aufweisen, welche aus harzgetränktem Papier besteht. Diese wabenförmig strukturierte Mittelschicht wird beidseitig von jeweils mindestens einer aus kohlenstofffaserverstärktem Kunststoff bestehenden Schicht umschlossen. Derartige CFK-Sandwich-Panels zeichnen sich durch hohe mechanische Stabilität bei gleichzeitig niedrigem Gewicht aus.

Bei Flugzeugen werden verschiedene elektronische Bauelemente, insbesondere Antennen, Signalleuchten, Beleuchtungseinrichtungen sowie Sensor- und Messelemente an der Außenhülle des Flugzeugrumpfes angebracht. Verschiedene Antennen werden für unterschiedliche Aufgaben vorgesehen, beispielsweise zur Navigation des Flugzeuges oder zur Kommunikation mit einer Bodenstation. Beispiele für derartige Antennen sind V/UHF-Antennen (very/ultra high frequency), TACAN-Antennen (technical air navigation) sowie GADIRS-Antennen (GPS Air Data Inertia Reference System). Diese Antennen müssen einen Mindestabstand zueinander aufweisen, damit eine Signalabstrahlung einer Antenne nicht das Empfangssignal einer anderen Antenne behindert und dort zu einer Signalstörung führt. An der Außenhülle eines Flugzeugrumpfes werden typischerweise mehr als zwanzig elektronische Bauelemente beziehungsweise Einheiten, wie Antennen, Signalleuchten, Sensoren und dergleichen, montiert. Trotz des zum Teil notwendigen Mindestabstandes ist daher die Fläche zum Anbringen derartiger elektronischer Bauelemente begrenzt. Insbesondere bei kleineren Passagierflugzeugen und bei Flugzeugen, bei denen die Tragflächen beziehungsweise Flügel oben auf dem Flugzeugrumpf aufliegen (Hochdecker), ist die zur Verfügung stehende Fläche für elektronische Bauelemente geringer.

Aus der EP 0 790 182 B1 sind Blitzableiterstreifen bekannt, die insbesondere für den Schutz von Radarköpfen an Luftfahrzeugen eingesetzt werden. Dabei ist eine Seite eines Blitzableiterstreifens auf der gegen den Blitz zu schützenden Oberfläche befestigt und die andere Seite des Blitzableiterstreifens wird dem Blitz ausgesetzt. Diese bekannten Blitzableiterstreifen bestehen aus einem mit leitenden Partikeln geladenen thermoplastischen Polymer.

Die DE 1 296 539 beschreibt eine Blitzschutzvorrichtung für eine aus Kunststoffteilen hergestellte Kraftfahrzeugkarosserie. Elektrische Leiter, beispielsweise aus Kupfermaschengewebe, sind auf den Kunststoffbauteilen angeordnet oder in den Kunststoffbauteilen eingebettet. Diese elektrischen Leiter sind an Verbindungsstellen elektrisch leitend mit anderen Kraftfahrzeugteilen verbunden.

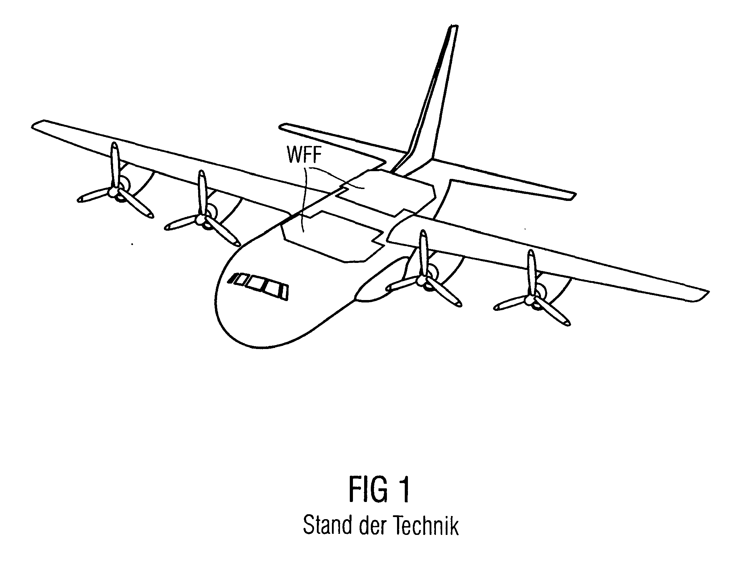

Fig. 1 zeigt ein Flugzeug nach dem Stand der Technik, bei dem die Tragflächen auf dem Flugzeugrumpf aufliegen. Dabei wird eine stromförmige, aerodynamische Verkleidung WFF (wing fuselage fairing) angebracht, um den Luftwiderstand zu vermindern. Zur Vermeidung von unnötigem Gewicht wird diese aerodynamische Verkleidung WFF herkömmlicherweise aus CFK-Sandwich-Panels gebildet.

Damit elektronische Bauelemente an der Außenhülle des Flugzeugrumpfes angebracht werden können, ist es notwendig, einen ausreichenden Schutz vor Blitzeinschlägen bereitzustellen, damit die entsprechenden elektronischen Einheiten in ihrer Funktionsfähigkeit während eines Blitzeinschlages in das Flugzeug nicht beeinträchtigt oder sogar zerstört werden. Herkömmliche CFK-Sandwich-Panels, die auch bei der in Fig. 1 dargestellten aerodynamischen Verkleidung im Übergangsbereich zwischen den Tragflächen und dem Flugzeugrumpf eingesetzt werden, erlauben es nicht, daran elektronische Einheiten zu befestigen, weil die obere und untere CFK-Lage des Sandwich-Panels zwar elektrisch leitfähig ist, doch nur einen sehr hohen Übergangswiderstand zum Ableiten von Überspannungen beziehungsweise von durch Blitzeinschlag generiertem elektronischen Strom haben. Bei herkömmlichen CFK-Sandwich-Panels ist die Dicke der aus zumindest einer CFK-Lage bestehenden CFK-Schicht gering, so dass auch die elektrische Leitfähigkeit relativ gering ist. Aufgrund ihrer Materialeigenschaften verhält sich eine Struktur aus Faserverbundwerkstoff unter Blitzschlag anders als eine aus metallischen Werkstoffen. Ein Faserverbundwerkstoff ist bezüglich der elektrischen Leitfähigkeit anisotop (CFK/BFK) bzw. nicht leiten (GFK/SFK). Der spezifische elektrische Widerstand eines Faserverbundwerkstoffes ist um einige Zehnerpotenten höher als der von Metallen. Dies macht einen Faserverbundwerkstoff selbst ungeeignet als Ableiter von hohen Blitzstömen. Im Falle eines Blitzschlages wird aufgrund der zwar geringen aber vorhandenen Leitfähigkeit des Faserverbundwerkstoffes das Eindringen des Blitzstromes in das Material nicht verhindert. Dies hat zur Folge, dass ein erheblicher Betrag an thermischer und auch an mechanischer Energie durch den relativ hohen spezifischen Widerstand frei wird, der die Struktur aus Faserverbundwerkstoff erheblich schädigen kann. Daher können selbst Strukturen aus Faserverbundwerkstoff mit hohen elektrischen Durchschlagfestigkeiten von einem Blitz durchschlagen werden. Dies ist insbesondere dann der Fall, wenn Geräte mit örtlich hohem elektrischen Potential, wie beispielsweise Radargeräte, Elektronikgeräte, Antennen, Generatoren sowie metallische Substrukturen in der Nähe des Einschlagortes liegen. Bei einer direkten Befestigung eines elektronischen Bauelements beziehungsweise einer elektronischen Einheit kann daher ein herkömmliches CFK-Sandwich-Panel, wie es beispielsweise bei der in Figur 1 dargestellten aerodynamischen Verkleidung WFF verwendet wird, keinen ausreichenden Blitzschutz gewährleisten, da der Übergangswiderstand des CFK-Sandwich-Panels zu hoch ist. Der Übergangswiderstand eines herkömmlichen CFK-Sandwich-Panels liegt in Abhängigkeit von der Panelgröße und vom Lagenaufbau bei mehr als 100 mΩ. Für einen ausreichenden Blitzschutz ist allerdings ein Übergangswiderstand von höchstens 5 mΩ zum Rumpf notwendig.

Es ist daher bei herkömmlichen Flugzeugen, die CFK-Sandwich-Panels verwenden, nicht möglich, diese mit elektronischen Einheiten zu versehen, beispielsweise mit Antennen, da kein ausreichender Blitzschutz bzw. electrical Bonding (elektrische Anbindung) besteht.

Es ist daher eine Aufgabe der vorliegenden Erfindung, eine Anordnung zum Schutz einer elektronischen Einheit vor Blitzschlagschäden und deren Abwendung zu schaffen, die es erlaubt, diese elektronische Einheit an einem CFK-Sandwich-Panel zu befestigen.

Diese Aufgabe wird erfindungsgemäß durch eine Blitzschutz-Anordnung mit den im Patentanspruch 1 angegebenen Merkmalen gelöst. Die Blitzschutz-Anordnung berücksichtigt Electrical Bounding-Anforderungen und Austauschbarkeitsanforderungen.

Die Erfindung bezieht sich auf eine Blitzschutz-Anordnung zum Ableiten eines elektrischen Stromes, der durch Blitzeinwirkung auf eine elektronischen Einheit kurzzeitig strukturbelastet fließend wirkt, wobei die elektrische Einheit an einer aerodynamischen Verkleidung eines Flugzeuges angebraucht ist. Bestandteile dieser Blitzschutz-Anordnung sind eine elektrisch leitfähigen Montageplatte, die an einer Außenseite eines CFK-Sandwich-Panels der aerodynamischen Verkleidung angeordnet ist, und eine elektrisch leitfähigen Rückplatte, die an einer Innenseite des CFK-Sandwich-Panels der aerodynamischen Verkleidung angeordnet ist, sowie mehrere speziell installierte Befestigungsmittel beispielsweise in Summe mit drei Gruppen von Befestigungsmitteln, welche die elektronische Einheit ,die Montageplatte und die Rückplatte elektrisch verbinden, so dass der Blitzstrom, der infolge des in die Montageplatte treffenden Blitzschlages entsteht und fließt, an den Flugzeugrumpf niederohmig abgeleitet wird.

Die erfindungsgemäße Blitzschutz-Anordnung dient somit als Blitzstromableiter für eine an einer Außenhülle eines Flugzeuges angebrachte elektronische Einheit, wobei diese elektronische Einheit an einem CFK-Sandwich-Panel angebracht ist.

Bei einer Ausführungsform der erfindungsgemäßen Blitzschutz-Anordnung liegt die zu schützende elektronische Einheit getrennt durch eine Korrosionsschutz-Dichtungsschicht auf der Montageplatte mittig auf.

Die Korrosionsschutz-Dichtungsschicht stellt eine Feuchtigkeitsbarriere dar und schützt die darunterliegenden Strukturen vor Korrosion.

Bei einer Ausführungsform der erfindungsgemäßen Blitzschutz-Anordnung weist das CFK-Sandwich-Panel mindestens eine obere CFK-Lage, die aus kohlefaserverstärktem Kunststoff besteht,
eine wabenförmig strukturierte Schicht, insbesondere aus harzgetränktem Papier, und
mindestens eine untere CFK-Lage, die aus kohlefaserverstärktem Kunststoff besteht, auf.

Die Verwendung von CFK-Sandwich-Panels für die aerodynamische Verkleidung verringert das Gewicht der Verkleidung und somit das Gewicht des Flugzeuges. Aufgrund des geringeren Gesamtgewichtes kann im Flugbetrieb Treibstoff gespart werden.

Bei einer Ausführungsform der erfindungsgemäßen Blitzschutz-Anordnung ist auf der äußeren CFK-Lage des CFK-Sandwich-Panels ein Drahtgeflecht oder eine Metallfolie zum Schutz des CFK-Sandwich-Panels bei etwaigen direkten Einschlägen eines Blitzeinschlag eingebracht.

Da das auf dem CFK-Sandwich-Panel angebrachte elektronische Bauelement nur einen Teil des CFK-Sandwich-Panels abdeckt, stellt eine geflechtartig oder netzartig ausgeführte metallene Schicht, die vorzugsweise mit einem Drahtgeflecht (Bronzenetz) realisiert ist, einen Blitzschutz bereit, wenn ein Blitz nicht das elektronische Bauelement, sondern die verbleibende Außenfläche des CFK-Sandwich-Panels selbst trifft. Ohne das Vorsehen des Drahtgeflechtes würde es bei einem Blitzeinschlag in das CFK-Sandwich-Panel zu Strukturschäden beispielsweise zur Erzeugung eines Lochs in dem CFK-Sandwich-Panel, kommen. Das Drahtgeflecht wird deshalb vorzugsweise aus einer Metalllegierung, beispielsweise Bronze, hergestellt.

Bei einer Ausführungsform der erfindungsgemäßen Blitzschutz-Anordnung bestehen die Montageplatte und die Rückplatte aus einem Metall, das nach der bekannten elektrochemischen Spannungsreihe sowohl eine geringe Potentialdifferenz zu dem Material des Drahtgeflechtes als auch zu dem CFK aufweist und gleichfalls ein möglichst geringes Gewicht besitzt.

Diese Ausführungsform hat den Vorteil, dass aufgrund der geringen elektrochemischen Potenzialdifferenz etwaige Korrosionseffekte minimiert werden können.

Bei einer bevorzugten Ausführungsform der erfindungsgemäßen Blitzschutz-Anordnung bestehen die Montageplatte und die Rückplatte aus einem Titan.

Titan zeichnet sich durch ein geringes Gewicht bei falls geringer Potentialdifferenz innerhalb der elektrochemischen Spannungsreihe zu Kupferlegierungen und zu CFK aus.

Bei einer alternativen Ausführungsform bestehen die Montageplatte und die Rückplatte aus einem Aluminium. Die elektrochemische Potentialdifferenz zwischen Aluminium und Kupfer bzw. CFK ist größer als bei Titan, so dass beim "unreineren" Material vermehrt mit Korrosionserscheinungen zu rechnen ist.

Aluminium zeichnet sich durch ein besonders geringes Eigengewicht aus.

Bei einer Ausführungsform der erfindungsgemäßen Blitzschutz-Anordnung ist die Rückplatte ringförmig ausgebildet.

Die Ringform der Rückplatte führt zu einer weiteren Gewichtseinsparung.

Bei einer weiteren Ausführungsform der erfindungsgemäßen Blitzschutz-Anordnung ist die Rückplatte an ihrer äußeren Peripherie über eine zweite Gruppe von Befestigungsmitteln elektrisch mit der Montageplatte verbunden.

Bei einer weiteren Ausführungsform der erfindungsgemäßen Blitzschutz-Anordnung ist die Montageplatte an ihrer äußeren Peripherie ihrerseits über eine dritte Gruppe von Befestigungsmitteln elektrisch mit einer Haltestruktur und über diese mit dem Rumpf des Flugzeuges verbunden.

Das Vorsehen weiterer Befestigungsmittel erlaubt es, dass das gesamte befestigt angeordneten CFK-Sandwich-Panel einschließlich des daran angebrachten elektronischen Bauelementes beziehungsweise einer gleichermaßen angebrachten elektronischen Einheit in einfacher und schneller Weise demontierbar beziehungsweise austauschbar ist.

Dabei ist die Blitzschutz-Anordnung durch Lösen der dritten Gruppe von Befestigungsmitteln von der Haltestruktur demontierbar.

Bei einer Ausführungsform der erfindungsgemäßen Blitzschutz-Anordnung ist die zu schützende elektronische Einheit eine Antenne.

Bei einer alternativen Ausführungsform der erfindungsgemä-βen Blitzschutz-Anordnung ist die zu schützende elektronische Einheit ein Sensorelement.

Bei einer weiteren Ausführungsform der erfindungsgemäßen Blitzschutz-Anordnung ist die zu schützende elektronische Einheit eine Signalleuchte.

Bei einer weiteren Ausführungsform der erfindungsgemäßen Blitzschutz-Anordnung ist die zu schützende elektronische Einheit eine Beleuchtungseinheit.

Bei einer Ausführungsform der erfindungsgemäßen Blitzschutz-Anordnung beträgt der Übergangswiderstand zum Ableiten des Bllitzstromes an den Rumpf des Flugzeuges weniger als 5 mΩ.

Bei einer Ausführungsform der erfindungsgemäßen Blitzschutz-Anordnung wird eine nach einem Blitzeinschlag entstehende Überspannung von der elektronischen Einheit über die erste Gruppe von Befestigungsmitteln zu der Rückplatte und von dort über die zweite Gruppe von Befestigungsmitteln zu der Montageplatte zurück und von dort über die dritte Gruppe von Befestigungsmitteln zu der Haltestruktur des Rumpfes abgeleitet.

Bei einer Ausführungsform der erfindungsgemäßen Blitzschutz-Anordnung werden die Befestigungsmittel jeweils durch Schrauben und Annietmuttern (als Massepunkt ausgeführt) mit einem geeigneten elektrisch leitfähigen Oberflächenschutz gebildet.

Dies erlaubt das Herstellen zuverlässiger elektrischer Massepunkte beziehungsweise elektrischer Anbindungspunkte (electrical Bonding).

Schraubenverbindungen bzw. -befestigungen bieten zudem den Vorteil, dass sie im Vergleich gegenüber Nietverschlag in einfacher(er) Weise lösbar sind.

Bei einer alternativen Ausführungsform werden die Befestigungsmittel durch elektrisch leitfähige Nieten oder Bolzen gebildet.

Im Weiteren werden Ausführungsformen der erfindungsgemäßen Blitzschutz-Anordnung unter Bezugnahme auf die beigefügten Figuren beschrieben.

Es zeigen:
- Figur 1: strukturelle Komponenten eines herkömmlichen Flugzeuges nach dem Stand der Technik;
- Figuren 2A,2B: eine Draufsicht und eine Schnittansicht eines CFK-Sandwich-Panels, bei der die erfindungsgemäße Anordnung zum Ableiten eines Stromes verwendet wird;
- Figur 3: einen Ausschnitt der in Fig. 2B dargestellten Schnittansicht zur Darstellung einer Ausführungsform der erfindungsgemäßen Blitzschutz-Anordnung;
- Figuren 4A, 4B: mögliche Ausführungsformen der bei der erfindungsgemäßen Vorrichtung eingesetzten Montageplatte und Rückplatte.

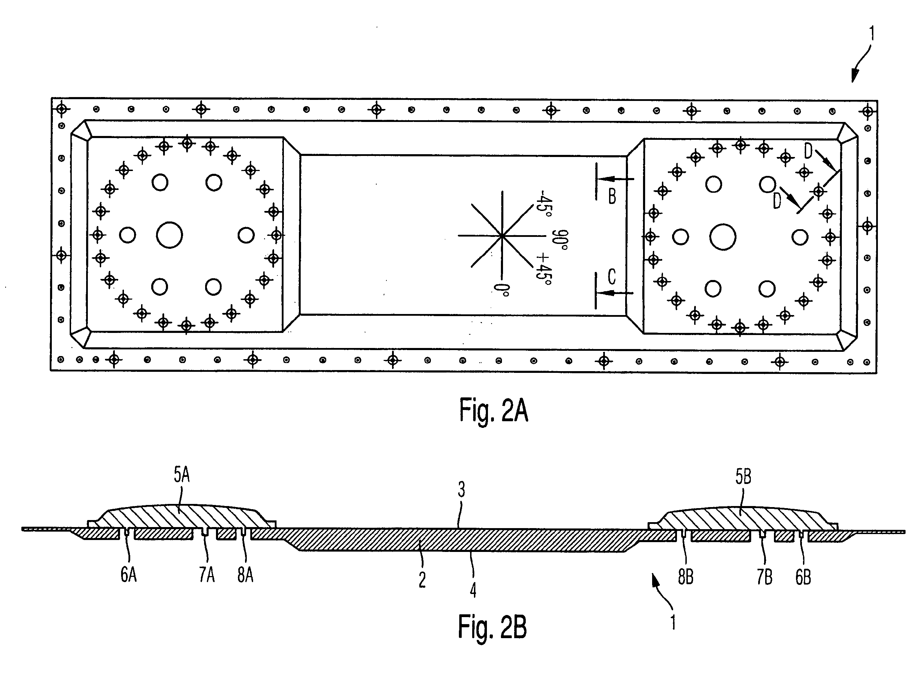

Wie man aus den Figuren 2A, 2B erkennen kann, weist das im Bereich der aerodynamischen Verkleidung eingesetzte CFK-Sandwich-Panel 1 eine wabenförmig strukturierte Schicht 2 auf, die beispielsweise aus harzgetränktem Papier besteht. Auf der Ober- beziehungsweise Außenseite dieser wabenförmigen Mittelschicht 2 befinden sich mindestens eine CFK-Lage 3, deren Dicke zur Verminderung des Gewichtes relativ gering ist. Auf der CFK Außenlage befindet sich ein Drahtgeflecht zum Schutz des CFK-Sandwich-Panels 1. Auf der unteren Seite beziehungsweise Innenseite der Verkleidung befinden sich ebenfalls mindestens eine CFK-Lage 4 aus kohlefaserverstärktem Kunststoff. Jedes CFK Sandwich-Panel 1 hat einen umlaufenden monolithischen (ohne Wabe) Randbereich. Dieser Randbereich dient der mechanischen Kontaktierung mit der Haltestruktur. An den Seiten verjüngt sich die wabenförmig strukturierte Mittelschicht 2 zum Anbringen von elektrischen Baueinheiten 5A, 5B, wobei es sich bei dem dargestellten Beispiel um Antennen handelt. Diese Antennen weisen elektronische Anschlüsse beziehungsweise Koaxstecker 6A, 7A, 8A beziehungsweise 6B, 7B, 8B auf. Diese Anschlusskontakte sind von innen über Bohrungen in dem CFK-Sandwich-Panel 1 kontaktierbar beziehungsweise anschließbar. Bei dem in Fig. 2 dargestellten Ausführungsbeispiel ist das CFK-Sandwich-Panel 1 symmetrisch zum Anschluss von zwei Antennen 5A, 5B auf beiden Seiten der in Fig. 1 dargestellten aerodynamischen Verkleidung ausgebildet. Die Panelgröße des in Fig. 2A dargestellten CFK-Sandwich-Panels 1 beträgt beispielsweise 510 x 1600 mm. Die für die Anschlusskontakte der Antennen vorgesehenen Bohrungen sind in Fig. 2A ebenfalls erkennbar.

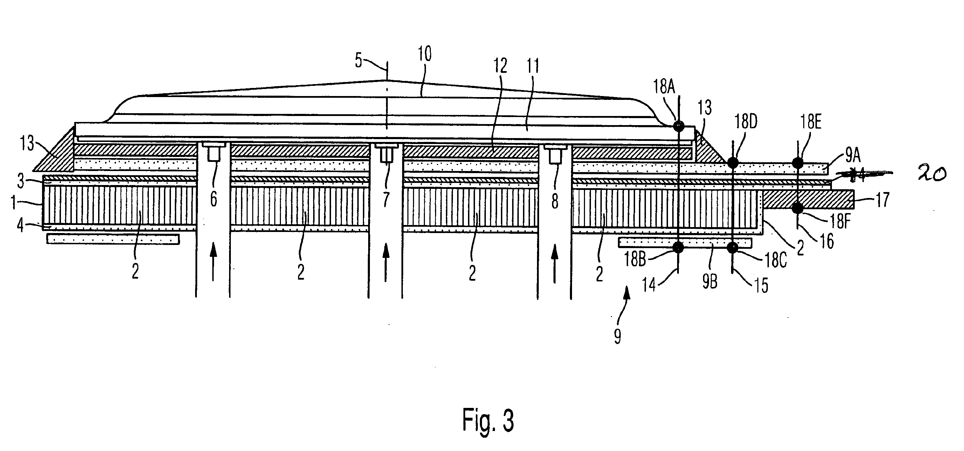

Fig. 3 zeigt eine Detailansicht der in Fig. 2B dargestellten Querschnittsansicht. Fig. 3 zeigt eine mögliche Ausführungsform einer erfindungsgemäßen Blitzschutz-Anordnung 9 zum Schutz einer elektronischen Einheit 5 gegen die direkten Effekte eines Blitzeinschlags. Bei dem in Fig. 3 dargestellten Ausführungsbeispiel handelt es sich bei der elektronischen Einheit 5 um eine Antenne, beispielsweise eine CRPA (control radiation pattern antenna) -Antenne. Diese Antenne weist eine aus einem elektrisch nicht leitfähigen Material bestehende Hülle 10 auf, die auch als Radom bezeichnet wird, auf. Diese Hülle 10 dient zum Schutz der darunter angebrachten eigentlichen Antenne. Weiterhin weist die Antenne einen Antennenfuß 11 auf, der beispielsweise aus Metall besteht. An der Unterseite der Antenne sind Anschlusskontakte 6, 7, 8 vorgesehen, bei denen es sich beispielsweise um Koaxstecker handelt. Diese können von der Innenseite eines Flugzeugrumpfes aus über elektrische Anschlussstecker kontaktiert werden. Dafür sind in dem CFK-Sandwich-Panel 1 entsprechende Bohrungen vorgesehen. Diese Bohrungen gehen durch die drei Schichten 2, 3, 4 des CFK-Sandwich-Panels 1 hindurch. Die elektronische Einheit 5 beziehungsweise die erwähnte Antenne liegt durch eine Korrosionsschutz-Dichtungsschicht 12 getrennt auf einer Montageplatte 9A der erfindungsgemäßen Blitzschutz-Anordnung auf.

Die Korrosionsschutz-Dichtungsschicht 12 besteht beispielsweise aus einem Gummi. Diese Korrosionsschutz-Dichtungsschicht 12 bildet eine Feuchtigkeitsbarriere und schützt insbesondere die darunter liegende Montageplatte 9A vor einer Korrosion. Zusätzlich kann eine Versiegelung 13 vorgesehen werden, die einerseits den Antennenfuß 11 sowie die darunter liegende Dichtungsschicht 12 umschließt und andererseits neben dem Antennenfuß 11 und der Dichtungsschicht 12 auch die Montageplatte 9A seitlich vor Feuchtigkeit schützt und den aerodynamischen Widerstand des Flugzeuges vermindert. Unterhalb der Montageplatte 9A liegt, wie in Fig. 3 dargestellt, ein Kupfergeflecht 20, das auf der äußeren beziehungsweise oberen CFK-Lage 3 aufliegt und diese ihrerseits vor Blitzeinschlägen schützt, die unter Umständen zu Löchern in dem CFK-Sandwich-Panel 1 führen würden.

Die erfindungsgemäße Vorrichtung 9 weist neben der elektrisch leitfähigen Montageplatte 9A eine weitere elektrisch leitfähige Rückplatte 9B auf. Diese elektrisch leitfähige Rückplatte 9B ist bei dem in Fig. 3 dargestellten Beispiel ringförmig. Aufgrund der Ringform kann das Eigengewicht der elektrisch leitfähigen Rückplatte 9B minimiert werden. Wie in Fig. 3 dargestellt, sind die beiden elektrisch leitfähigen Platten 9A, 9B der erfindungsgemäßen Vorrichtung 9 miteinander über eine Gruppe elektrisch leitfähiger Befestigungsmittel 14 verbunden. Bei diesen elektrisch leitfähigen Befestigungsmitteln 14 handelt es sich vorzugsweise um Schrauben mit einem elektrisch leitfähigen Oberflächenschutz. Eine Gruppe von Befestigungsmitteln bzw. Schrauben besteht beispielsweise aus vier symmetrisch angeordneten Schrauben. Bei der in Fig. 3 dargestellten Ausführungsform wird durch die Gruppe der Schrauben 14 der Antennenfuß 11 mit der leitfähigen Rückplatte 9B der erfindungsgemäßen Vorrichtung 9 elektrisch verbunden. Die beiden elektrisch leitfähigen Platten, das heißt die Montageplatte 9A und die Rückplatte 9B, werden vorzugsweise aus Titan hergestellt. Titan zeichnet sich einerseits durch ein geringes Eigengewicht und gute elektrische Leitfähigkeit aus. Andererseits ist die elektrochemische Potentialdifferenz zwischen Titan und sowohl der Kupferlegierung, bestehend aus dem Drahtgeflecht 20, als auch zu dem CFK, bestehend aus der inneren CFK-Schicht, gering, so dass eine Korrosion minimiert werden kann.

Bei einer alternativen Ausführungsform werden die Montageplatte 9A und die Rückplatte 9B aus Aluminium hergestellt. Bei alternativen Ausführungsformen sind die beiden Platten 9A, 9B aus anderen Metallen gefertigt, die ein geringes Eigengewicht aufweisen.

Bei einer weiteren möglichen Ausführungsform bestehen die beiden Platten 9A, 9B nicht aus einem reinen Metall oder einer Metalllegierung, sondern aus einem anderen elektrisch gut leitfähigen Material, das genügend Stabilität verleiht und ferner ein geringes Eigengewicht besitzt. Ein metallisierter Kunststoff könnte gegebenenfalls als Vorbild gewählt werden.

Wie man aus Fig. 3 erkennen kann, weist die erfindungsgemä-βe Vorrichtung 9 in dem dargestellten Ausführungsbeispiel neben der ersten Gruppe von Befestigungsmitteln 14 eine zweite Gruppe von Befestigungsmitteln 15 auf, bei denen es sich ebenfalls um Schrauben handeln kann. Diese zweite Gruppe von Befestigungsmitteln 15 verbindet die Rückplatte 9B elektrisch mit der Montageplatte 9A. Die zweite Gruppe von Befestigungsmitteln 15 ist in der äußeren Peripherie der ringförmigen Rückplatte 9B angeordnet.

Bei der in Fig. 3 dargestellten Ausführungsform wird die Montageplatte 9A durch eine weitere bzw. dritte Gruppe Befestigungsmittel 16 elektrisch mit einer Haltestruktur 17 und über diese mit dem Rumpf des Flugzeuges verbunden. Die Haltestruktur 17 besteht ebenfalls aus Metall oder einem anderen elektrisch gut leitfähigen Material.

Die in Fig. 3 dargestellte Vorrichtung 9 bietet einen sicheren Schutz des elektronischen Bauelements 5, das heißt der Antenne, vor den Effekten eines Blitzeinschlages. Bei einem Blitzeinschlag wird die dabei entstehende Überspannung mittels eines elektrischen Stromes (Blitzschlag) abgeleitet, der von dem elektrisch leitfähigen Antennenfuß 11 über die erste Gruppe von Befestigungsmittel 14 zu der zweiten elektrisch leitfähigen Platte 9B (Rückplatte) fließt. Von der Rückplatte 9B fließt der dort hin geleitete Strom zurück über die zweite Gruppe von Befestigungsmitteln 15 zu der Montageplatte 9A und von dort über die dritte Gruppe von Befestigungsmitteln 16 ab zu der metallischen Substruktur beziehungsweise der Haltestruktur 17 des Flugzeugrumpfes. Bei einer möglichen Ausführungsform besteht zusätzlich eine elektrische Verbindung zwischen den ersten elektrisch leitfähigen Befestigungsmitteln 14 und der Montageplatte 9A. Ein in das elektrische Bauelement 5 einschlagender Blitz wird somit durch die erfindungsgemäße Blitzschutz-Anordnung in die metallene bzw. leitfähige Rumpfstruktur des Flugzeuges abgeleitet, wobei der Blitzstrom über die elektrisch leitfähigen Platte 9A, 9B in die Haltestruktur 17 fließt und von dort in den verbleibenden Rumpfbereich des Flugzeuges abgeleitet wird. Dieser abgeleitete Blitz tritt an einer anderen Stelle des Flugzeugrumpfes wieder aus.

Wie man in Fig. 3 erkennen kann, weist die erfindungsgemä-βen Vorrichtung mehrere Massepunkte 18A bis 18F zur Gewährleistung des Blitzschutzes auf. An den Massepunkten 18A bis 18F besteht eine elektrische Verbindung mit sehr niedrigen elektrischen Übergangswiderständen.

Bei der in Fig. 3 dargestellten Ausführungsform bestehen die drei Gruppen von Befestigungsmitteln 14, 15, 16 vorzugsweise jeweils aus vier Schrauben/Annietmuttern mit elektrisch leitfähigem Oberflächenschutz. Die Schrauben haben einen Mindestdurchmesser. Schrauben bieten den Vorteil, dass sie in einfacher Weise lösbar sind.

Die in Fig. 3 dargestellte Ausführungsform bietet den besonderen Vorteil, dass das CFK-Sandwich-Panel 1 inklusive des daran angebrachten elektronischen Bauelementes 5, das heißt beispielsweise einer Antenne, in einfacher Weise schnell von der Haltestruktur 17 des Flugzeugrumpfes demontierbar ist. Ein Auswechseln des gesamten Panels 1 kann daher innerhalb eines relativ kurzen Zeitraumes, beispielsweise innerhalb von wenigen Minuten, erfolgen. Dies ist von besonderer Bedeutung, wenn ein elektronisches Bauelement 5, beispielsweise eine Antenne oder ein Sensor aus irgendeinem Grunde ausfällt und während eines Zwischenstopps eines Flugzeuges schnell ausgewechselt werden muss. In der Ausführungsform nach Figur 3 dienen die dargestellten Befestigungsmittel 14, 15, 16 der elektrischen Verbindung zur Bereitstellung eines geringen elektrischen Übergangswiderstandes an den Übergangsstellen (Auflegebaustein) der einander aufliegenden und zur befestigenden Schichten (Elemente) für jenes vorgestellte CFK-Sandwich-Panel 1 zum Ableiten eines auftretenden Blitzstromes, der von dem elektronischen Bauelement 5 abgeleitet im bzw. durch die Rumpfstruktur des Flugzeuges abfließen soll. Bei der in Fig. 3 dargestellten Ausführungsform beträgt der Übergangswiderstand zum Ableiten eines während eines Blitzeinschlages verursachten Stromes weniger als 5 mΩ.

Neben den in Fig. 3 dargestellten Befestigungsmitteln 14, 15, 16, bei denen es sich in der Regel um Schrauben handelt, können weitere Befestigungsmittel vorgesehen sein, die der mechanischen Befestigung dienen, wenn gewisse Randbedingungen, beispielweise leitfähiger Oberflächenschutz und ausreichender Durchmesser, erfüllt sind.

Bei einer alternativen Ausführungsform können die Befestigungsmittel 14, 15, 16 auch durch elektrisch leitfähige Nieten oder Bolzen gebildet werden.

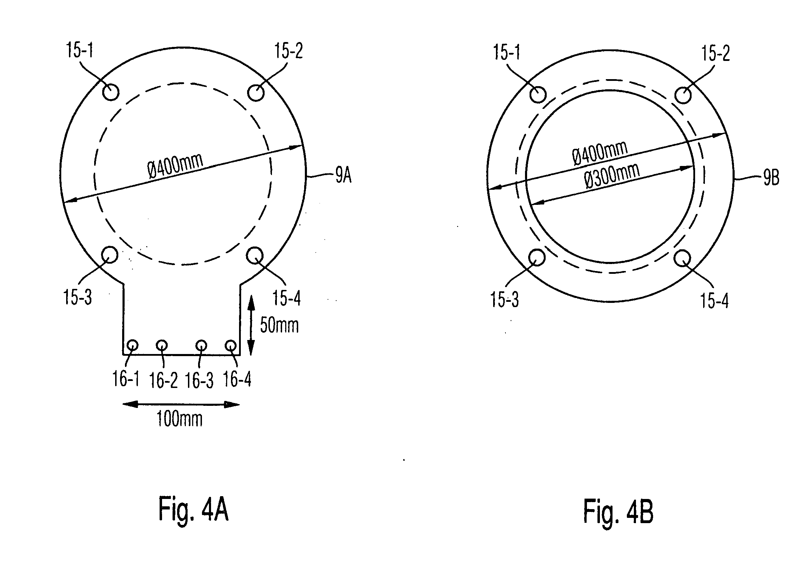

Fig. 4A zeigt ein Ausführungsbeispiel für eine bei der erfindungsgemäßen Vorrichtung 9 eingesetzte Montageplatte 9A. In dieser Ausführungsform besteht die Montageplatte 9A aus einer kreisrunden Titanscheibe mit einem Durchmesser von 400 mm und einer Dicke von 2,5 mm (wegen Verwendung von Senkschrauben, zur Verminderung des aerodynamischen Widerstandes). In der Peripherie der Montageplatte 9A sind Bohrungen für elektrisch leitfähige Schrauben vorgesehen, die zum Ableiten von Überspannungen dienen. Weiterhin können beispielsweise vier Bohrungen vorgesehen sein, um mit vier elektrisch leitfähigen Schrauben 16-1, 16-2, 16-3, 16-4 einen Blitzschutz der Antenne umzusetzen. Diese Bohrungen weisen beispielsweise einen Durchmesser von 5,2 mm auf. Die elektrisch leitfähigen Schrauben können beispielsweise einen Durchmesser von 4,8 mm besitzen. Bei einer möglichen Ausführungsform werden die Schrauben 15-i 10 mm vom Rand der Montageplatte 9A entfernt durch die Bohrungen geführt.

Fig. 4B zeigt eine mögliche Ausführungsform der Rückplatte 9B. Bei dieser kann es sich ebenfalls um eine Titanplatte handeln, die beispielsweise einer Dicke von 1,2 mm besitzt. Wie in Fig. 4B dargestellt, ist die Rückplatte 9B vorzugsweise keine Scheibe, sondern ringförmig, um unnötiges Gewicht zu sparen. Der Außendurchmesser der ringförmigen Rückplatte 9B beträgt bei der dargestellten Ausführungsform ebenfalls, wie bei der Montageplatte 9A, 400 mm. Der Innendurchmesser beträgt beispielsweise 300 mm. Bei einer alternativen Ausführungsform ist die Rückplatte 9B ebenfalls scheibenförmig wie die Montageplatte 9A und weist Bohrungen zum Anschluss der Kontakte 6, 7, 8 der elektronischen Baueinheit 5 auf. Die erfindungsgemäße Vorrichtung 9 eignet sich neben Flugzeugen auch für andere Flugobjekte, wie beispielsweise Helikopter.

Die in Fig. 4A dargestellte, aus Titan bestehende Montageplatte 9A weist einen Vorsprung 19 auf, der mit mehreren Bohrungen versehen ist. Durch diese Bohrungen können die in Fig. 3 dargestellten dritten Befestigungsmittel beziehungsweise Schrauben 16-1, 16-2, 16-3, 16-4 geführt werden.

### Bezugszeichenliste

- 1: CFK-Sandwich-Panel
- 2: Mittelschicht
- 3: CFK-Lage
- 4: CFK-Lage
- 5: elektrische Baueinheit
- 6: Anschlusskontakt
- 7: Anschlusskontakt
- 8: Anschlusskontakt
- 9A: Montageplatte
- 9B: Rückplatte
- 10: Hülle
- 11: Antennenfuß
- 12: Dichtungsschicht
- 13: Versiegelung
- 14: Befestigungsmittel
- 15: Befestigungsmittel
- 16: Befestigungsmittel
- 17: Haltestruktur
- 18A: Massepunkte
- 18B: Massepunkte
- 18C: Massepunkte
- 18D: Massepunkte
- 18E: Massepunkte
- 18F: Massepunkte
- 19: Vorsprung
- 20: Drahtgeflecht

## Patentansprüche

1. Blitzschutzanordnung für ein Flugzeug zum Schutz einer elektronischen Einheit (5) gegenüber Blitzen, die bei Blitzeinschlag befähigt ist, einen Blitzstrom an eine elektrisch leitfähige Haltestruktur (17) eines Flugzeugrumpfes des Flugzeuges abzuleiten, wobei die elektronische Einheit (5) an einer aerodynamischen Verkleidung außerhalb des Flugzeuges befestigt ist, wobei die Blitzschutzanordnung aufweist:
a) eine elektrisch leitfähige Montageplatte (9A), die an einer Außenseite eines CFK-Sandwich-Panels (1) der aerodynamischen Verkleidung angeordnet ist;
b) eine elektrisch leitfähigen Rückplatte (9B), die an einer Innenseite des CFK-Sandwich-Panels (1) der aerodynamischen Verkleidung angeordnet und elektrisch leitend mit der Montageplatte (9A) verbunden ist;
c) elektrisch leitfähige und lösbare Befestigungsmittel (14), die für eine körperseitige Befestigung der elektronischen Einheit (5) vorgesehen sind, mit welchen zwischen der elektronischen Einheit (5) und der Montageplatte (9a) und Rückplatte (9b), die an dem CFK-Sandwich Panel (1) angeordneten sind, eine elektrisch leitende Verbindung realisiert ist und weiter elektrisch leitfähige und lösbare Befestigungsmittel (16) über die Montageplatte (9A) mit der elektrisch leitfähigen Haltestruktur (17) verbunden ist, dermaßen dass bei einem Blitzeinschlag dem Blitzstrom von der elektronischen Einheit (5) über die Montageplatte (9A) und die Rückplatte (9B) ein niederohmiger Strompfad bereitgestellt wird, von dem aus der Blitzstrom an die elektrisch leitfähige Haltestruktur (17) abgeleitet wird.

2. Blitzschutzanordnung nach Anspruch 1, **dadurch gekennzeichnet, dass** die elektronische Einheit (5) mittig auf der Montageplatte (9A) angeordnet ist, wobei auf der Montageplatte (9A) eine Korrosionsschutz-Dichtungsschicht (12) gelegen ist, auf der die Montageplatte (9A) positioniert ist.

3. Blitzschutz-Anordnung nach Anspruch 1,
**dadurch gekennzeichnet,**
**dass** das CFK-Sandwich-Panel (1)
mindestens eine obere CFK-Lage (3), die aus kohlefaserverstärktem Kunststoff besteht,
eine wabenförmig strukturierte Schicht (2), und mindestens eine untere CFK-Lage (4), die aus kohlefaserverstärktem Kunststoff besteht, aufweist.

4. Blitzschutz-Anordnung nach Anspruch 3,
**dadurch gekennzeichnet,**
**dass** auf der oberen CFK-Lage (3) des CFK-Panels (1) ein metallenes Drahtgeflecht (20) oder eine Metallfolie zum Schutz des CFK-Panels (1) vor den Auswirkungen eines Blitzeinschlages vorgesehen ist.

5. Blitzschutz-Anordnung nach Anspruch 4,
**dadurch gekennzeichnet,**
**dass** das Drahtgeflecht (20) aus einer Metalllegierung, vorzugsweise aus einem Geflecht aus Bronzedrähten, besteht.

6. Blitzschutz-Anordnung nach Anspruch 4,
**dadurch gekennzeichnet,**
**dass** die Montageplatte (9A) aus einem Metall besteht, dass in der elektrochemischen Spannungsreihe eine geringe Potentialdifferenz zu dem Material des Drahtgeflechtes (20) und ein geringes Gewicht aufweist.

7. Blitzschutz-Anordnung nach Anspruch 1 bis 6,
**dadurch gekennzeichnet,**
**dass** die Montageplatte (9A) und die Rückplatte (9B) aus Titan bestehen.

8. Blitzschutz-Anordnung nach Anspruch 1 bis 7,
**dadurch gekennzeichnet,**
**dass** die Rückplatte (9B) zur Gewichtseinsparung ringförmig ausgebildet ist.

9. Blitzschutz-Anordnung nach Anspruch 1 bis 8,
**dadurch gekennzeichnet,**
**dass** die Rückplatte (9B) an ihrer äußeren Peripherie über elektrisch und leitfähige Befestigungsmittel (15) elektrisch leitend mit der Montageplatte (9A) verbunden ist.

10. Blitzschutz-Anordnung nach Anspruch 9,
**dadurch gekennzeichnet,**
**dass** die Montageplatte (9A) an ihrer Peripherie über elektrisch leitfähige Befestigungsmitteln (16) elektrisch leitend mit der elektrisch leitfähigen Haltestruktur (17) verbunden ist, wobei der Blitzstrom über die elektrisch leitfähigen Platten (9A, 9B) in die Haltestruktur (17) fließt und von dort in den verbleibenden Rumpfbereich des Flugzeuges ableitbar ist.

11. Blitzschutz-Anordnung nach Anspruch 1 bis 10,
**dadurch gekennzeichnet,**
**dass** die elektronische Einheit (5) durch eine Antenne, ein Sensorelement, eine Signalleuchte oder durch eine Beleuchtungseinheit verkörpert ist.

12. Blitzschutz-Anordnung nach Anspruch 1 bis 11,
**dadurch gekennzeichnet,**
**dass** der Übergangswiderstand zum Ableiten des Stromes an den Flugzeugrumpf weniger als 5 mΩ beträgt.

13. Blitzschutzanordnung nach Anspruch 10,
**dadurch gekennzeichnet,**
**dass** ein Leitungspfad für eine während eines Blitzeinschlages entstehende Überspannung, die an die elektrisch leitfähige Haltestruktur (17) abgeleitet wird, von der elektronischen Einheit (5) über eine erste Gruppe von Befestigungsmitteln (14) zu der Rückplatte (9B) und von dort über eine zweite Gruppe von Befestigungsmitteln (15) zu der Montageplatte (9A) und von dort über eine dritte Gruppe von Befestigungsmitteln (16) zu der Haltestruktur (17) verläuft.

14. Blitzschutz-Anordnung nach Anspruch 13,
**dadurch gekennzeichnet,**
**dass** die Gruppen von Befestigungsmitteln (14, 15, 16) durch metallene Schrauben, vorzugsweise jeweils mindestens durch vier Schrauben, mit einem elektrisch leitfähigen Oberflächenschutz realisiert sind.

15. Blitzschutz-Anordnung nach Anspruch 13,
**dadurch gekennzeichnet,**
**dass** die Gruppen von Befestigungsmitteln (14, 15, 16) durch Bolzen verstärkt sind.

16. Blitzschutz-Anordnung nach Anspruch 1,
**dadurch gekennzeichnet,**
**dass** die elektrisch leitfähige Haltestruktur (17) metallen ausgebildet ist.

17. Blitzschutz-Anordnung nach Anspruch 10,
**dadurch gekennzeichnet,**
**dass** die elektrisch leitfähige Haltestruktur (17) eine Unterstruktur eines Sicherheitsbereiches einer Flugzeustruktur ist, die metallen ausgebildet ist.

18. Blitzschutz-Anordnung nach Anspruch 1,
**dadurch gekennzeichnet,**
**dass** die aerodynamische Verkleidung ein integrierter Bestandteil einer Flugzeugstruktur, vorzugsweise des Flugzeugrumpfes, ist.

19. Blitzschutz-Anordnung nach Anspruch 5,
**dadurch gekennzeichnet,**
**dass** das Drahtgeflecht (20) aus einer Kupferlegierung besteht.

20. Aerodynamische Verkleidung für ein Flugzeug mit einer Blitzschutz-Anordnung nach Ansprüchen 1-19.

21. Flugzeug mit einer aerodynamischen Verkleidung nach Anspruch 20.

## Claims

1. Lightning protection arrangement for an aircraft for protecting an electronic unit (5) from lightning, which is capable, in the event of a lightning strike, of dissipating a lightning current to an electrically conductive holding structure (17) of an aircraft fuselage of the aircraft, the electronic unit (5) being fastened to an aerodynamic facing outside the aircraft, the lightning protection arrangement comprising:
a) an electrically conductive mounting plate (9A), which is arranged on the outside of a CFRP sandwich panel (1) of the aerodynamic facing;
b) an electrically conductive rear plate (9B), which is arranged on the inside of the CFRP sandwich panel (1) of the aerodynamic facing and is electrically conductively connected to the mounting plate (9A);
c) electrically conductive and detachable fastening means (14), which are provided for fastening the electronic unit (5) to the body and with which an electrically conductive connection is produced between the electronic unit (5) and the mounting plate (9a) and rear plate (9b), which are arranged on the CFRP sandwich panel (1), and further electrically conductive and detachable fastening means (16) are connected via the mounting plate (9A) to the electrically conductive holding structure (17), in such a way that, in the event of a lightning strike, the lightning current is provided with a low-resistance current path from the electronic unit (5) via the mounting plate (9A) and the rear plate (9B), from which the lightning current is dissipated to the electrically conductive holding structure (17).

2. Lightning protection arrangement according to claim 1, **characterised in that** the electronic unit (5) is arranged centrally on the mounting plate (9A), a corrosion protection sealing layer (12), on which the mounting plate (9A) is positioned, being laid on the mounting plate (9A).

3. Lightning protection arrangement according to claim 1, **characterised in that** the CFRP sandwich panel (1) comprises at least one upper CFRP layer (3) which consists of carbon-fibre-reinforced plastics material, a honeycomb-structured layer (2), and at least one lower CFRP layer (4) which consists of carbon-fibre-reinforced plastics material.

4. Lightning protection arrangement according to claim 3, **characterised in that** a metal wire netting (20) or a metal foil for protecting the CFRP panel (1) from the effects of a lightning strike is provided on the upper CFRP layer (3) of the CRFP panel (1)

5. Lightning protection arrangement according to claim 4, **characterised in that** the wire netting (20) consists of a metal alloy, preferably of a netting of bronze wires.

6. Lightning protection arrangement according to claim 4, **characterised in that** the mounting plate (9A) consists of a metal which has a low potential difference from the material of the wire netting (20) in the electrochemical series and a low weight.

7. Lightning arrangement according to claims 1 to 6, **characterised in that** the mounting plate (9A) and the rear plate (9B) consist of titanium.

8. Lightning arrangement according to claims 1 to 7, **characterised in that** the rear plate (9B) is formed annularly so as to save weight.

9. Lightning protection arrangement according to claims 1 to 8, **characterised in that** the outer periphery of the rear plate (9B) is electrically conductively connected via electrically conductive fastening means (15) to the mounting plate (9A).

10. Lightning protection arrangement according to claim 9, **characterised in that** the periphery of the mounting plate (9A) is electrically conductively connected via electrically conductive fastening means (16) to the electrically conductive holding structure (17), the lightning current flowing via the electrically conductive plates (9A, 9B) into the holding structure (17), from where it can be dissipated into the remainder of the fuselage region of the aircraft.

11. Lightning protection arrangement according to claims 1 to 10, **characterised in that** the electronic unit (5) is embodied as an antenna, a sensor element, a signal light or a lighting unit.

12. Lightning protection arrangement according to claims 1 to 11, **characterised in that** the transfer resistance for dissipating the current to the aircraft fuselage is less than 5 mΩ.

13. Lightning protection arrangement according to claim 10, **characterised in that** a conduction path for an overvoltage, which occurs during a lightning strike and which is dissipated to the electrically conductive holding structure (17), extends from the electronic unit (5) via a first set of fastening means (14) to the rear plate (9B), subsequently via a second set of fastening means (15) to the mounting plate (9A), and subsequently via a third set of fastening means (16) to the holding structure (17).

14. Lightning protection arrangement according to claim 13, **characterised in that** the sets of fastening means (14, 15, 16) are implemented as metal screws, preferably at least four screws in each case, comprising an electrically conductive surface protection.

15. Lightning protection arrangement according to claim 13, **characterised in that** the groups of fastening means (14, 15, 16) are reinforced by bolts.

16. Lightning protection arrangement according to claim 1, **characterised in that** the electrically conductive holding structure (17) is made of metal.

17. Lightning protection arrangement according to claim 10, **characterised in that** the electrically conductive holding structure (17) is a sub-structure of a safety region of an aircraft structure, which is made of metal.

18. Lightning protection arrangement according to claim 1, **characterised in that** the aerodynamic facing is an integrated component of an aircraft structure, preferably of the aircraft fuselage.

19. Lightning protection arrangement according to claim 5, **characterised in that** the wire netting (20) consists of a copper alloy.

20. Aerodynamic facing for an aircraft comprising a lightning protection arrangement according to claims 1 to 19.

21. Aircraft comprising an aerodynamic facing according to claim 20.

## Revendications

1. Agencement paratonnerre pour un avion pour la protection d'un unité électronique (5) contre la foudre, qui est capable, en cas de coup de foudre, de dévier un courant de foudre vers une structure de maintien (17) électriquement conductrice d'un fuselage de l'avion, l'unité électronique (5) étant fixée sur un habillage aérodynamique à l'extérieur de l'avion, l'agencement paratonnerre présentant :
a) une plaque de montage (9A) électriquement conductrice, qui est disposée sur une face extérieure d'un panneau sandwich en PRFC (1) de l'habillage aérodynamique ;
b) une plaque arrière (9B) électriquement conductrice, qui est disposée sur une face intérieure du panneau sandwich en PRFC (1) de l'habillage aérodynamique et qui est reliée de manière électriquement conductrice à la plaque de montage (9A) ;
c) des moyens de fixation (14) électriquement conducteurs et amovibles, qui sont prévus pour une fixation côté corps de l'unité électronique (5), avec lesquels un raccordement électriquement conducteur est réalisé entre l'unité électronique (5) et les plaques de montage (9a) et arrière (9b), qui sont disposées sur le panneau sandwich en PRFC (1), et en outre des moyens de fixation (16) électriquement conducteurs et amovibles sont réliés par le moyen de la plaque de montage (9A) à la structure de maintien (17) électriquement conductrice, à un degré tel qu'en cas de coup de foudre un chemin de courant à basse impédance est préparé pour le courant de foudre partant de l'unité électronique (5) via la plaque de montage (9A) et la plaque arrière (9B), à partir duquel chemin le courant de foudre est dévié vers la structure de maintien (17) électriquement conductrice.

2. Agencement paratonnerre selon la revendication 1, **caractérisé par le fait que** l'unité électronique (5) est disposée de manière centrale sur la plaque de montage (9A), une couche d'étanchéité pour la protection contre la corrosion (12) étant posée sur la plaque de montage (9A), sur laquelle est positionnée la plaque de montage (9A).

3. Agencement paratonnerre selon la revendication 1, **caractérisé par le fait que** le panneau sandwich en PRFC (1) présente au moins une couche supérieure en PRFC (3), qui est constituée de matière plastique renforcée de fibres de carbone, une couche structurée en nid d'abeille (2), et au moins une couche inférieure en PRFC (4), qui est constituée de matière plastique renforcée de fibres de carbone.

4. Agencement paratonnerre selon la revendication 3, **caractérisé par le fait qu'**un grillage en métal (20) ou une pellicule en métal est prévu(e) sur la couche supérieure en PRFC (3) du panneau en matière plastique renforcée par des fibres de carbone (1) pour protéger le panneau en PRFC (1) des effets d'un coup de foudre.

5. Agencement paratonnerre selon la revendication 4, **caractérisé par le fait que** le grillage (20) est constitué d'un alliage de métal, préférentiellement d'un tressage en fils de bronze.

6. Agencement paratonnerre selon la revendication 4, **caractérisé par le fait que** la plaque de montage (9A) est constituée d'un métal, qui présente dans la gamme électrochimique des tensions une faible différence de potentiel par rapport au matériau du grillage (20) et un faible poids.

7. Agencement paratonnerre selon les revendications 1 à 6, **caractérisé par le fait que** la plaque de montage (9A) et la plaque arrière (9B) sont constituées de titane.

8. Agencement paratonnerre selon les revendications 1 à 7, **caractérisé par le fait que** la plaque arrière (9B) a une forme annulaire pour en réduire le poids.

9. Agencement paratonnerre selon les revendications 1 à 8, **caractérisé par le fait que** la plaque arrière (9B) est reliée sur sa périphérie extérieure de manière électriquement conductrice à la plaque de montage (9A) par l'intermédiaire de moyens de fixation (15) électriquement conducteurs.

10. Agencement paratonnerre selon la revendication 9, **caractérisé par le fait que** la plaque de montage (9A) est reliée sur sa périphérie de manière électriquement conductrice à la structure de maintien (17) électriquement conductrice via des moyens de fixation (16) électriquement conducteurs, le courant de foudre circulant via les plaques (9A, 9B) électriquement conductrices dans la structure de maintien (17) et pouvant, à partir de là, être dévié dans la zone de fuselage restante.

11. Agencement paratonnerre selon les revendications 1 à 10, **caractérisé par le fait que** l'unité électrique (5) se présente comme une antenne, un élément capteur, un avertisseur lumineux ou une unité d'éclairage.

12. Agencement paratonnerre selon les revendications 1 à 11, **caractérisé par le fait que** la résistance de contact pour dévier le courant vers le fuselage d'avion est inférieure à 5 mΩ.

13. Agencement paratonnerre selon la revendication 10, **caractérisé par le fait qu'**un chemin de conduction pour une surtension apparaissant pendant un coup de foudre, qui est déviée vers la structure de maintien (17) électriquement conductrice, s'étend de l'unité électronique (5) via un premier groupe de moyens de fixation (14) vers la plaque arrière (9B) et à partir de là via un second groupe de moyens de fixation (15) vers la plaque de montage (9A) et à partir de là via un troisième groupe de moyens de fixation (16) vers la structure de maintien (17).

14. Agencement paratonnerre selon la revendication 13, **caractérisé par le fait que** les groupes de moyens de fixation (14, 15, 16) sont réalisés par des vis métalliques, préférentiellement respectivement au moins par quatre vis, avec une protection superficielle électriquement conductrice.

15. Agencement paratonnerre selon la revendication 13, **caractérisé par le fait que** les groupes de moyens de fixation (14, 15, 16) sont renforcés par des boulons.

16. Agencement paratonnerre selon la revendication 1, **caractérisé par le fait que** la structure de maintien (17) électriquement conductrice est formée de métaux.

17. Agencement paratonnerre selon la revendication 10, **caractérisé par le fait que** la structure de maintien (17) électriquement conductrice est une sous-structure d'une zone de sécurité d'une structure d'avion, qui est formée de métaux.

18. Agencement paratonnerre selon la revendication 1, **caractérisé par le fait que** l'habillage aérodynamique est une partie intégrante d'une structure d'avion, préférentiellement du fuselage d'avion.

19. Agencement paratonnerre selon la revendication 5, **caractérisé par le fait que** le grillage (20) est constitué d'un alliage de cuivre.

20. Habillage aérodynamique pour un avion avec un agencement paratonnerre selon les revendications 1 à 19.

21. Avion avec un habillage aérodynamique selon la revendication 20.
